# EUROPÄISCHE PATENTSCHRIFT

(11) **EP 2 196 892 B1**
(45) Veröffentlichungstag und Bekanntmachung des Hinweises auf die Patenterteilung: **22.08.2018**
(21) Anmeldenummer: 09178751.5
(22) Anmeldetag: 10.12.2009
(51) Int. Cl.: G06F 3/0488, G01C 21/36, B60K 35/00

(54) **Verfahren und Vorrichtung zum Anzeigen von Informationen**
Method and device for displaying information
Procédé et dispositif d'affichage d'informations

(30) Priorität: 12.12.2008 DE 102008061988
(43) Veröffentlichungstag der Anmeldung: 16.06.2010
(73) Patentinhaber: Volkswagen Aktiengesellschaft, 38440 Wolfsburg (DE)
(72) Erfinder: Bendewald, Lennart, 38442, Wolfsburg (DE); Henze, Stefan, 38104, Braunschweig (DE); Wäller, Christoph, 38102, Braunschweig (DE); Missall, Markus, 38102, Braunschweig (DE)
(74) Vertreter: Reitstötter Kinzebach

(56) Entgegenhaltungen:
- DE-A1-102006 032 117
- JP-A- H09 292 830
- JP-A- 2007 328 570
- US-A1- 2008 165 255
- US-A1- 2008 180 404
- MARK HANCOCK ET AL: "Shallow-depth 3d interaction", PROCEEDINGS OF THE SIGCHI CONFERENCE ON HUMAN FACTORS IN COMPUTING SYSTEMS , CHI '07, 26. April 2007 (2007-04-26), - 3. Mai 2007 (2007-05-03), Seite 1147, XP55025914, New York, New York, USA DOI: 10.1145/1240624.1240798 ISBN: 978-1-59-593593-9

## Beschreibung

Die vorliegende Erfindung betrifft ein Verfahren zum Anzeigen von Informationen, bei dem zumindest ein Objekt mittels einer Anzeigefläche angezeigt wird, wobei in dem Objekt Informationen in einem ersten virtuellen Ansichtswinkel dargestellt werden, und in Abhängigkeit von einem Steuersignal von einer Steuervorrichtung Graphikdaten erzeugt werden, welche die Darstellung der von dem graphischen Objekt dargestellten Informationen so verändern, dass sie Informationen in einem zweiten virtuellen Ansichtswinkel dargestellt werden. Ferner betrifft die Erfindung eine Vorrichtung zum Anzeigen von Informationen, mit einer berührungsempfindlichen Anzeigefläche, zum Anzeigen der Informationen zumindest eines Objekts und einer Steuervorrichtung, mit welcher Graphikdaten erzeugbar sind, die zumindest ein auf der Anzeigefläche darstellbares graphisches Objekt anzeigen, in welchem Informationen in einem ersten virtuellen Ansichtswinkel und in einem zweiten virtuellen Ansichtswinkel darstellbar sind. Die Erfindung betrifft ein Verfahren und eine Vorrichtung zum Anzeigen von Informationen in einem Fahrzeug.

In einem Fahrzeug werden herkömmlicherweise verschiedene Informationen angezeigt, die insbesondere betriebsbezogene und verkehrsbezogene Daten des Fahrzeugs für den Fahrer visuell darstellen. Mit der Zunahme elektronischer Einrichtungen im Fahrzeug wurde es erforderlich, eine große Informationsmenge im Fahrzeug darzustellen. Beispielsweise werden zusätzlich zu den betriebsbezogenen Daten des Fahrzeugs Informationen zu Fahrerassistenzsystemen und zu Kommunikations- und Multimediaanwendungen angezeigt. Von besonderer Bedeutung ist hierbei die visuelle Darstellung von Informationen eines Navigationssystems, welche dem Fahrer während der Fahrt insbesondere Informationen zum Fahren einer bestimmten Route zur Verfügung stellt. Die Informationen des Navigationssystems werden insbesondere anhand eines Objekts dargestellt, welches eine geographische Karte darstellt.

Um die vielfältigen Informationen flexibel anzeigen zu können, werden z. B. freiprogrammierbare Anzeigeflächen eingesetzt, die beispielsweise im so genannten Kombiinstrument des Fahrzeugs oder oberhalb der Mittelkonsole des Fahrzeugs angeordnet sind. Die Anzeigefläche wird in diesem Fall insbesondere als Multifunktionsanzeige verwendet, in welcher unter anderem auch ein Objekt mit der geographischen Karte eines Navigationssystems dargestellt werden kann.

Die Multifunktionsanzeigen werden in Verbindung mit einem Bediensystem betrieben. Das Bediensystem kann mechanische Bedienelemente umfassen. Ferner kann die Anzeigefläche selbst mit einer berührungsempfindlichen Oberfläche versehen sein, um als Bedienelement einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und in Abhängigkeit von der Anzeige auf der Anzeigefläche einem Bedienvorgang zugeordnet.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Bei der Darstellung einer geographischen Karte eines Navigationssystems ist es besonders wichtig, dass die komplexen in der Karte enthaltenden Informationen so dargestellt werden, dass der Fahrer sie schnell und intuitiv erfassen kann, da der Fahrer diese Informationen während der Fahrt erfassen muss. Es sind daher Navigationssysteme bekannt, bei denen der Fahrer zwischen verschiedenen Ansichten der geographischen Karte umschalten kann. Beispielsweise kann der Fahrer zwischen einer zweidimensionalen Ansicht der geographischen Karte, bei welcher das Straßennetz in einer Aufsicht angezeigt wird, und einer perspektivisch dargestellten dreidimensionalen Ansicht der geographischen Karte hin und her schalten. Das Verstellen der Ansicht ist durch ein zusätzliches Bedienelement möglich. Nachteilig in dieser Anordnung ist, dass das zusätzliche Bedienelement Bauraum benötigt, der üblicherweise im Innenraum des Fahrzeugs knapp bemessen ist. Selbst wenn das Bedienelement mittels einer auf einem Touchscreen angezeigten Schaltfläche bereitgestellt wird, ergibt sich der Nachteil, dass diese Schaltfläche einen Teil der Anzeigefläche einnimmt.

Die US 2008/180404 A1 beschreibt ein Multi-Touch-Verfahren, mit welchem graphische Objekte gesteuert werden können. Die Steuerung umfasst die Bewegung, die Maßstabsveränderung und Rotation in zwei Dimensionen und drei Dimensionen herbeiführt. Außerdem können auch Schwenkbewegungen gesteuert werden.

Mark Hancock et al.: "Shallow-depth 3d interaction", Proceedings of the Sigchi Conference on Human Factors in Computing Systems, CHl '07, 26. April 2007 - 3. Mai 2007, Seite 1147 - 1156 beschreibt ebenso ein Multi-Touch-Verfahren auf einer berührungsempfindlichen Oberfläche. Bei dem Verfahren wird der Ansichtswinkel eines graphischen Objekts, wie beispielsweise eines dreidimensionalen Würfels, verändert, wenn ein Finger den graphisch dargestellten Würfel berührt. Durch eine Bewegung des Fingers auf der berührungsempfindlichen Oberfläche kann der Ansichtswinkel verändert werden. Wenn zwei Finger verwendet werden, so müssen sie auf der Oberfläche bewegt werden, um eine Veränderung der Darstellung des Würfels hervorzurufen.

Aus der US 2008/0165255 A1 ist eine Gestensteuerung für Geräte mit einer oder mit mehreren berührungsempfindlichen Oberflächen bekannt. Dabei werden graphische Objekte in Abhängigkeit von Bewegungen von Fingerspitzen auf den berührungsempfindlichen Oberflächen rotiert.

Aus der JP 2007328570 ist eine Kartendarstellung bekannt, bei der zwischen einer Ansicht aus einer Vogelperspektive und einer Ansicht von einem Punkt hinter einem Fahrzeug hin und her gewechselt werden kann.

Schließlich ist aus der DE 10 2006 032 117 A1 ein Informationssystem für ein Verkehrsmittel bekannt, welches ein Display zur stereoskopischen oder autostereoskopischen Darstellung von Informationen verwendet. Ferner umfasst das Informationssystem eine Eingabeeinheit mit einer Einrichtung zum Erfassen der Position eines Objekts vor dem Display innerhalb des Verkehrsmittels.

Es ist die Aufgabe der vorliegenden Erfindung, ein Verfahren und eine Vorrichtung der eingangs genannten Art bereitzustellen, bei denen ein Nutzer durch einen schnell ausführbaren und intuitiven Bedienvorgang zwischen zwei virtuellen Ansichtswinkeln, für die Darstellung von Informationen, hin und her schalten kann.

Diese Aufgabe wird erfindungsgemäß durch ein Verfahren mit den Merkmalen des Anspruchs 1 und eine Vorrichtung mit den Merkmalen des Anspruchs 6 gelöst. Vorteilhafte Aus- und Weiterbildungen ergeben sich aus den abhängigen Ansprüchen.

Bei dem erfindungsgemäßen Verfahren ist mit einer berührungsempfindlichen Oberfläche der Anzeigefläche die gleichzeitige Berührung bei verschiedenen Bereichen detektierbar und das Steuersignal wird durch einen Bedienvorgang auf der berührungsempfindlichen Oberfläche ausgelöst, bei dem die Anzeigefläche gleichzeitig bei zumindest zwei Bereichen berührt wird. Zum Erzeugen des Steuersignals wird die Anzeigefläche somit bei zumindest zwei Bereichen berührt, diese Berührung wird detektiert und als ein Bedienvorgang interpretiert, dem schließlich das Steuersignal zugeordnet wird. Ein entsprechendes Steuersignal wird daraufhin erzeugt, woraufhin die Steuervorrichtung Graphikdaten erzeugt, welche die Informationsdarstellung von dem ersten virtuellen Ansichtswinkel in den zweiten virtuellen Ansichtswinkel schwenkt. Beim Übergang von der Darstellung in dem ersten virtuellen Ansichtswinkel zu der Darstellung in den zweiten virtuellen Ansichtswinkel werden die Graphikdaten so erzeugt, dass das Schwenken der dargestellten Informationen in den zweiten virtuellen Ansichtswinkel z. B. als Animation gezeigt wird.

Die bei dem erfindungsgemäßen Verfahren eingesetzte Anzeigefläche ist insbesondere ein so genannter Multi-Touchscreen mit dem gleichzeitig die Berührung von Objekten bei verschiedenen Bereichen detektierbar ist. Für den Bedienvorgang kann der Nutzer somit beispielsweise mit zwei oder mehr Fingern auf der berührungsempfindlichen Oberfläche eine Geste ausführen. Bei dem erfindungsgemäßen Verfahren ist diese Geste insbesondere die gleichzeitige Berührung der Anzeigefläche mit zwei Fingerspitzen in einem bestimmten Bereich der Anzeigefläche.

Bei dem erfindungsgemäßen Verfahren hängt der Schwenkwinkel, d. h. die Differenz zwischen dem zweiten virtuellen Ansichtswinkel und dem ersten virtuellen Ansichtswinkel, von der Dauer der gleichzeitigen Berührung bei verschiedenen Bereichen der Anzeigefläche ab. Je länger die Anzeigefläche bei verschiedenen Bereichen berührt wird, desto größer ist der Schwenkwinkel.

Gemäß einer weiteren Ausgestaltung des erfindungsgemäßen Verfahrens wird bei dem Bedienvorgang eine vom Nutzer ausgeübte Kraft detektiert. Es wird insbesondere detektiert, mit welcher Kraft der Nutzer auf die berührungsempfindliche Oberfläche der Anzeigefläche drückt. Der Schwenkwinkel hängt in diesem Fall von der Größe der beim Bedienvorgang vom Nutzer ausgeübten Kraft ab. Je stärker der Nutzer auf die berührungsempfindliche Oberfläche der Anzeigefläche drückt, desto größer ist der Schwenkwinkel.

Gemäß einer weiteren Ausgestaltung des erfindungsgemäßen Verfahrens hängt die Ausrichtung der Schwenkachse von den Positionen der gleichzeitigen Berührungen der Anzeigefläche ab. Beispielsweise können bei der Anzeigefläche verschiedene Bereiche für den Bedienvorgang z. B. am oberen, unteren, rechten und linken Rand definiert sein. Berührt der Nutzer den oberen Bereich mit zwei Fingerspitzen, wird der Ansichtswinkel für die Darstellung der Informationen um eine horizontale Schwenkachse im unteren Bereich des Objekts geschwenkt. Berührt der Nutzer umgekehrt mit zwei Fingerspitzen den unteren Bereich, wird die zuvor virtuell nach hinten gekippte Darstellung der Information wieder aufgestellt. Gleichermaßen können die Informationen virtuell nach rechts bzw. nach links geschwenkt werden. Diese Bedienvorgänge sind für den Nutzer sehr intuitiv, da sie die dargestellten Informationen so schwenken, wie ein körperliches Objekt auf den Bedienvorgang reagieren würde.

Es wird darauf hingewiesen, dass unter einem Schwenken von Informationen im Sinne der Erfindung eine Transformation der Graphikdaten verstanden wird, bei welcher der virtuelle Ansichtswinkel auf die dargestellten Informationen verändert wird.

Unter einem Objekt, das auf der Anzeigefläche angezeigt wird, wird im Sinne der Erfindung ein Bereich der Anzeigefläche verstanden, in dem bestimmte Informationen in einer bestimmten Art und Weise dargestellt werden. Mit dem Objekt können die Objektgrenzen dargestellt werden; dies ist jedoch nicht zwingend erforderlich. Ferner kann das Objekt auch die gesamte Anzeigefläche einnehmen.

Bei dem erfindungsgemäßen Verfahren betreffen die graphisch dargestellten Informationen eine geographische Karte. Der erste virtuelle Ansichtswinkel ist in diesem Fall insbesondere 0°. In diesem Fall wird eine Aufsicht auf die geographische Karte gezeigt. Die Information wird in diesem Fall somit zweidimensional angezeigt. Der zweite virtuelle Ansichtswinkel liegt beispielsweise zwischen 0° und 90°, so dass eine Ansicht der geographischen Karte von schräg oben angezeigt wird. Bei diesem zweiten virtuellen Ansichtswinkel kann insbesondere eine dreidimensionale, dem Schwenkwinkel entsprechende Ansicht der geographischen Karte angezeigt werden.

Die dreidimensionale Anzeige kann mittels einer perspektivischen Darstellung von dreidimensionalen Elementen umgesetzt werden. Ferner ist es gemäß einer Ausgestaltung des erfindungsgemäßen Verfahrens möglich, dass die in dem Objekt dargestellten Informationen autostereoskopisch angezeigt werden. In diesem Fall sieht im Unterschied zur perspektivischen Darstellung das eine Auge des Betrachters ein geringfügig anderes Bild als das andere Auge, so dass eine reale dreidimensionale Darstellung erreicht wird. Bei einer autostereoskopischen Anzeige sind dabei keine speziellen Vorrichtungen, wie z. B. Brillen oder dergleichen, nötig, um den dreidimensionalen Effekt beim Betrachten der Anzeige hervorzurufen.

Die erfindungsgemäße Vorrichtung zum Anzeigen von Informationen ist dadurch gekennzeichnet, dass mittels der berührungsempfindlichen Oberfläche der Anzeigefläche die gleichzeitige Berührung bei verschiedenen Bereichen detektierbar ist und von der Steuervorrichtung in Abhängigkeit von der Detektion einer gleichzeitigen Berührung der berührungsempfindlichen Oberfläche der Anzeigefläche die Graphikdaten so veränderbar sind, dass die Darstellung der Informationen von dem ersten virtuellen Ansichtswinkel in den zweiten virtuellen Ansichtswinkel übergeht. Die Graphikdaten können insbesondere so verändert werden, dass eine Animation erzeugt wird, bei welcher die Informationen vom ersten virtuellen Ansichtswinkel in den zweiten virtuellen Ansichtswinkel geschwenkt werden.

Gemäß einer bevorzugten Ausgestaltung der erfindungsgemäßen Vorrichtung ist mittels der Anzeigefläche eine autostereoskopische Anzeige erzeugbar. Hierfür ist ein Display, welches die Anzeigefläche bereitstellt, z. B. mit einer Maske für die Trennung verschiedener Zwischenbilder, versehen. Die Maske ist beispielsweise eine wellenlängenselektive Filtermaske. Dieser Filter gibt die Lichtausbreitungsrichtungen der einzelnen Subpixel des Displays durch Abdecken bzw. Filtern vor. Einzelne Farbwerte der Pixel werden in verschiedenen Winkeln in den Raum abgestrahlt. Auf diese Weise lassen sich für die beiden Augen des Betrachters separate Bilder erzeugen, die beim Betrachter zu einem dreidimensionalen Bild zusammengesetzt werden. Dabei zeigt das Bild für das eine Auge eine leicht versetzte Betrachtungsposition relativ zu dem Bild, das für das andere Auge bestimmt ist. Vorzugsweise sind mindestens acht autostereoskopische Ansichten gleichzeitig darstellbar, wobei die Ansichten in einen horizontalen Sichtfächer abstrahlbar sind. Es können vorzugsweise mehrere stereoskopische Sichtfächer nebeneinander erzeugt werden und eine Sichtzone bilden. Bevorzugt sind in dem Sichtfächer insgesamt sechs bis acht nebeneinander liegende autostereoskopische Ansichten enthalten. Der horizontale Öffnungswinkel des Sichtfächers oder der Sichtfächer, in dem/denen eine autostereoskopische Darstellung erfolgt, ist vorzugsweise größer 15° und insbesondere zwischen 25 und 30°. Besonders bevorzugt ist ein Öffnungswinkel von 27°. Auf diese Weise können für den Betrachter mehrere Ansichten bei verschiedenen Betrachtungswinkeln erzeugt werden, bei denen jeweils korrekt Bildpaare für die Zusammensetzung zu einem dreidimensionalen Bild bei den jeweiligen Winkeln abgestrahlt werden. Dies hat zur Folge, dass man nahe am Display zwei Ansichten sieht, die weiter voneinander entfernt sind. Geht man weiter weg, dann verbreitern sich auch die Teilansichten und die Augen sehen näher benachbarte Ansichten. Die Zahl der Ansichten hängt von der Größe des Displays ab. Bei kleineren Displays, deren Diagonale 4 Zoll ist, haben sich insbesondere acht Ansichten als günstig erwiesen. Bei größeren Displays sind auch 16 oder 24 Ansichten möglich.

Gemäß einer weiteren Ausgestaltung der erfindungsgemäßen Vorrichtung, ist die Anzeigefläche drucksensitiv, so dass die bei der Berührung der Anzeigefläche ausgeübte Kraft detektierbar ist. Die Kraft kann beispielsweise resistiv oder kapazitiv detektiert werden. Ferner kann die auf die Anzeigefläche ausgeübte Kraft ortsaufgelöst detektiert werden.

Die Anzeigefläche der erfindungsgemäßen Vorrichtung ist im Innenraum eines Fahrzeugs angeordnet. In einem nicht erfindungsgemäßen Beispiel kann die Anzeigefläche jedoch auch einem mobilen Gerät, wie beispielsweise einem tragbaren Navigationsgerät oder einem mobilen Gerät der Unterhaltungselektronik, zugeordnet sein.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Vorrichtung und die Kopplung dieser Vorrichtung mit anderen Einrichtungen des Fahrzeugs, und
- die Figur 2 bis 4: zeigen Anzeigen, die mittels einem Ausführungsbeispiels des erfindungsgemäßen Verfahrens erzeugt wurden.

Die im Folgenden beschriebene Vorrichtung ist in einem Fahrzeug untergebracht. Den Fahrzeuginsassen, insbesondere dem Fahrer können mittels der Vorrichtung im Innenraum des Fahrzeugs, Informationen angezeigt werden. In entsprechender Weise kann die Vorrichtung in einem nicht erfindungsgemäßen Beispiel jedoch auch Teil eines mobilen Gerätes, wie z. B. einem mobilen Navigationssystem oder einem mobilen Gerät der Unterhaltungselektronik sein.

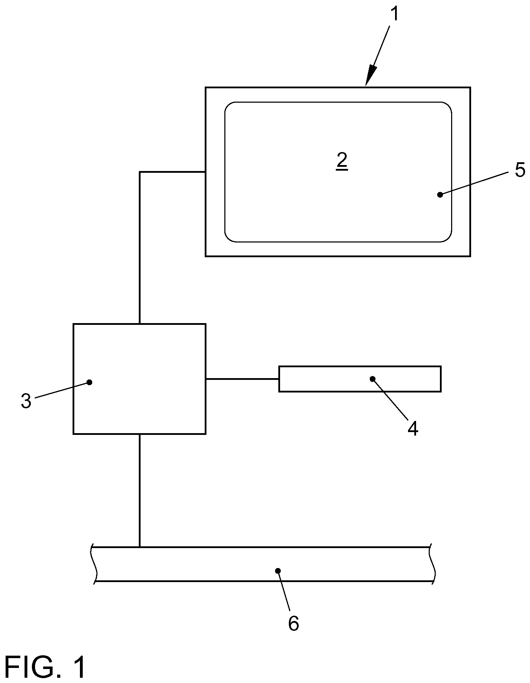

Die schematisch in Fig. 1 gezeigte Vorrichtung umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Baueinheit, bereitgestellt werden. Ferner ist die Anzeigefläche 2 mit einer berührungsempfindlichen Oberfläche 5 versehen. Die Anzeigevorrichtung 1 umfasst somit einen Touchscreen. Die berührungsempfindliche Oberfläche 5 ist so ausgebildet, dass die gleichzeitige Berührung bei verschiedenen Bereichen detektierbar ist. Es handelt sich somit um einen so genannten Multi-Touchscreen. Ein solcher Multi-Touchscreen ist beispielsweise in der US 2006/0125803 A1 sowie den in dieser Veröffentlichung zitierten Druckschriften beschrieben. Die Anzeigevorrichtung 1 ist mit einer Steuervorrichtung 3 gekoppelt. Mittels der Steuervorrichtung 3 können die Berührungen auf der berührungsempfindlichen Oberfläche 5 ortsaufgelöst erfasst und in Abhängigkeit von der Anzeige auf der Anzeigefläche 2 in Steuersignale umgesetzt werden. Ferner können von der Steuervorrichtung 3 Graphikdaten erzeugt werden, die mittels der Anzeigevorrichtung 1 angezeigt werden können.

Die Steuervorrichtung 3 ist des Weiteren mit einem Speicher 4 verbunden. In dem Speicher 4 sind unter anderem Daten gespeichert, welche die Steuervorrichtung 3 verwendet, um die Graphikdaten zur Anzeige auf der Anzeigefläche 2 zu erzeugen. Mittels der in dem Speicher 4 gespeicherten Daten, kann die Steuervorrichtung 3 insbesondere Graphikdaten erzeugen, die zumindest ein auf der Anzeigefläche 2 darstellbares graphisches Objekt 11 anzeigen, in welchem Informationen in verschiedenen Darstellungsarten angezeigt werden können, wie es später erläutert wird.

Schließlich ist die Steuervorrichtung 3 mit einem Fahrzeugbus 6 verbunden, über den die Steuervorrichtung 3 Daten mit verschiedenen Einrichtungen des Fahrzeugs austauschen kann. Die Steuervorrichtung 3 ist insbesondere direkt oder über den Fahrzeugbus 6 mit einem Navigationssystem gekoppelt. Auf der Anzeigefläche 2 wird insbesondere eine geographische Karte mit Zusatzinformationen des Navigationssystems angezeigt. Die Steuervorrichtung 3 steuert dabei die Darstellungsart der geographischen Karte.

Optional kann vor der Anzeigefläche 2 eine Maske angeordnet sein, um eine autostereoskopische Anzeige zu ermöglichen. Bei der Maske handelt es sich insbesondere um eine wellenlängenselektive Filtermaske bzw. eine optische Strukturmaske. Die Maske ermöglicht es, zwischen Teilbildern, die zu verschiedenen Ansichten gehören, zu unterscheiden und jede Ansicht in eine andere Richtung abzustrahlen. Es können somit Teilbilder für das rechte und für das linke Auge eines Betrachters getrennt werden. Beim Betrachten der Anzeigevorrichtung können die Teilbilder zu einer dreidimensionalen Ansicht zusammengesetzt werden. Hierfür sind keine weiteren Hilfsmittel wie Brillen oder dergleichen erforderlich. Hinsichtlich weiterer Details einer solchen Anzeigevorrichtung wird auf die DE 103 09 194 A1 und die DE 103 20 530 A1 verwiesen. Die Trennung der Teilbilder für das dreidimensionale Bild ist nur in einem bestimmten Raumwinkel möglich. Bewegt der Betrachter sich beispielsweise in einer horizontalen Ebene zur Seite, wird die Trennung der Teilbilder aufgehoben und die Darstellung wird zweidimensional. Um möglichst viele Bildpaare für eine korrekte dreidimensionale Darstellung im Raum zu erzeugen, werden für ein Anzeigebild mehrere Ansichten dargestellt. Die Teilbilder dieser verschiedenen Ansichten werden in etwa fächerförmig horizontal abgestrahlt, so dass sich der horizontale Sichtfächer bildet. Der Öffnungswinkel eines Sichtfächers beträgt z. B. 27°. Es hat sich herausgestellt, dass acht Ansichten bei einer 4 Zoll großen Anzeigefläche 2 besonders bevorzugt sind. In diesem Fall sind die Helligkeit, Auflösung und die räumliche Wiedergabe ausreichend. Die Auflösung der Anzeigefläche 2 ist in diesem Fall größer 150 dpi.

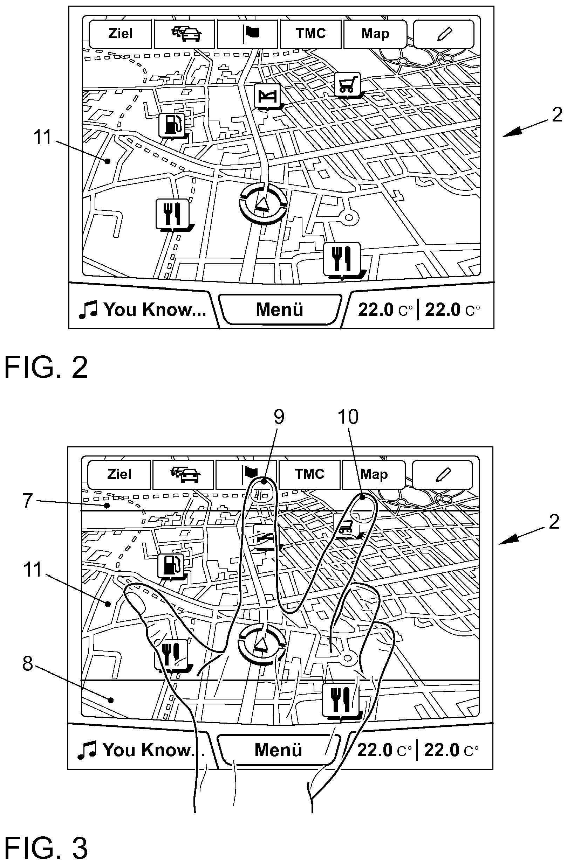

Des Weiteren kann optional die Anzeigefläche 2 drucksensitiv ausgebildet sein, d. h. mittels der Anzeigefläche 2 kann die bei der Betätigung der berührungsempfindlichen Oberfläche 5 ausgeübte Kraft detektiert werden. Beispielsweise kann die drucksensitive Oberfläche in Wirkverbindung mit einer ersten Schicht stehen, die eine Vielzahl leitender Spuren aufweist, die auf der Oberfläche der Schicht in einer ersten Richtung ausgerichtet sind. Ferner ist eine zweite Schicht vorgesehen, welche auch eine Vielzahl leitender Spuren aufweist, die in einer zweiten Richtung auf der Oberfläche der zweiten Schicht ausgerichtet sind. Zwischen den beiden Schichten ist eine deformierbare dielektrische Membran angeordnet. Durch die Anordnung der beiden Schichten und der Membran ist es möglich, dass mittels der leitenden Spuren der beiden Schichten ein Kapazitätsabbild gewonnen wird, wenn eine Kraft auf die erste Schicht ausgeübt wird. Dieses Kapazitätsabbild zeigt die Größe der Kraft an, die bei den jeweiligen Positionen auf die Oberfläche 5 ausgeübt wird. Weitere Details und Ausgestaltungen können der EP 1 840 715 A2 entnommen werden. Im Folgenden wird mit Bezug zu den Fig. 2 bis 4 ein Ausführungsbeispiel des erfindungsgemäßen Verfahrens erläutert, welches von der vorstehend beschriebenen Vorrichtung ausgeführt werden kann:
Wie in Fig. 2 gezeigt, wird von der Steuervorrichtung 3 in Verbindung mit dem Navigationssystem und dem Speicher 4, auf der Anzeigefläche 2 ein Objekt 11 dargestellt, in welchem eine geographische Karte angezeigt wird. Die geographische Karte enthält eine graphische Darstellung eines Straßennetzes, Symbole für Sonderziele sowie ein Symbol für die Position des eigenen Fahrzeugs. Die Darstellung der geographischen Karte erfolgt als Aufsicht auf die Karte. Die Karte wird somit senkrecht von oben betrachtet. Der in Fig. 2 gezeigten Darstellung der geographischen Karte kann somit ein virtueller Ansichtswinkel von 0° zugeordnet werden.

Der Nutzer hat nun die Möglichkeit, über einen bestimmten Bedienvorgang, den virtuellen Ansichtswinkel zu verändern. Er kann den Ansichtswinkel insbesondere so verändern, dass die Darstellung der Karte nach hinten, d. h. um eine in der unteren Kante des Objekts 11 liegende horizontale Achse, gekippt wird. Eine nach hinten gekippte Darstellung der Karte kann durch einen weiteren Bedienvorgang wieder aufgestellt werden.

Wie in Fig. 3 gezeigt sind für diese Bedienvorgänge auf der berührungsempfindlichen Oberfläche 5 der Anzeigefläche 2 zwei Bereiche 7 und 8 definiert. Der Bedienvorgang ist in diesem Fall so definiert, dass in dem Bereich 7 bzw. in dem Bereich 8 die berührungsempfindliche Oberfläche 5 bei zwei abgrenzbaren Bereichen, beispielsweise mit zwei Fingerspitzen 9 und 10, berührt wird. Die Berührung der zwei Fingerspitzen 9 und 10 im Bereich 7 bzw. im Bereich 8 der Oberfläche 5 der Anzeigefläche 2 wird von der Steuervorrichtung 3 erfasst. Die Steuervorrichtung 3 erzeugt daraufhin ein Steuersignal zur Veränderung der Graphikdaten für die Anzeige auf der Anzeigefläche 2.

Wenn der Nutzer z. B. den Bereich 7 gleichzeitig bei zumindest zwei Bereichen bzw. Stellen berührt, wird dieser Bedienvorgang bzw. diese Multitouch-Geste von der Steuervorrichtung 3 so interpretiert, dass der virtuelle Ansichtswinkel, der in dem Objekt 11 dargestellten Informationen, verändert werden soll. In dem hier beschriebenen Ausführungsbeispiel, bei dem in dem Objekt 11 eine geographische Karte angezeigt wird, interpretiert die Steuervorrichtung 3 den Bedienvorgang so, dass der virtuelle Ansichtswinkel so verändert wird, dass er einen Wert zwischen 0° und 90° einnimmt, wobei ein virtueller Ansichtswinkel von 0° einer senkrechten Aufsicht auf die Karte entspricht und ein virtueller Ansichtswinkel von 90° einem Ansichtswinkel entspricht, bei dem die Karte um 90° gekippt worden ist. Ein Ansichtswinkel von etwas weniger als 90° entspricht somit der Ansicht, die sich dem Fahrer tatsächlich bietet.

Die Veränderung des virtuellen Ansichtswinkels, d. h. der Winkel, um den die geographische Karte geschwenkt wird, wird wie folgt ermittelt:
Mittels der berührungsempfindlichen Oberfläche 5 und der Steuervorrichtung 3 kann die Dauer der gleichzeitigen Berührung bei verschiedenen Bereichen in dem Bereich 7 bzw. in dem Bereich 8 der berührungsempfindlichen Oberfläche 5 der Anzeigefläche 2 erfasst werden. In Abhängigkeit von dieser Dauer kann der Schwenkwinkel berechnet werden, wobei eine längere Berührung der berührungsempfindlichen Oberfläche 5 zu einem größeren Schwenkwinkel führt als eine kürzere Berührung der Oberfläche 5.

Falls die Oberfläche 5 der Anzeigefläche 2 drucksensitiv ausgebildet ist, kann alternativ oder zusätzlich die vom Nutzer ausgeübte Kraft während des Bedienvorgangs detektiert werden. In diesem Fall kann der Schwenkwinkel in Abhängigkeit von der beim Bedienvorgang vom Nutzer ausgeübten Kraft berechnet werden, wobei eine größere Kraft zu einem größeren Schwenkwinkel führt und eine kleiner Kraft zu einem kleineren Schwenkwinkel führt. Ferner kann der Schwenkwinkel auch mittels einer Funktion berechnet werden, die als Variablen sowohl die Dauer der Berührung als auch die Größe der bei der Berührung ausgeübten Kraft enthält.

Während des Bedienvorgangs wird die Darstellung der geographischen Karte in Echtzeit verändert. Auf diese Weise kann der Nutzer z. B. den Bereich 7 der berührungsempfindlichen Oberfläche 5 mit den zwei Fingern 9 und 10 so lange berühren, bis die geographische Karte in den gewünschten Ansichtswinkel geschwenkt worden ist. Auf diese Weise lässt sich die geographische Karte in jeden beliebigen Ansichtswinkel zwischen 0° und 90° schwenken.

Die Steuervorrichtung 3 erzeugt für die verschiedenen Darstellungen bei verschiedenen Ansichtswinkeln Graphikdaten, die eine perspektivische Darstellung der Karte aus dem entsprechenden Ansichtswinkel darstellt. Dabei ist es möglich, dass die Karte in der Aufsicht bei einem Ansichtswinkel von 0° zweidimensional angezeigt wird, bei einem Ansichtswinkel zwischen 0° und 90° wird die Karte jedoch perspektivisch dreidimensional angezeigt. In diesem Fall können somit insbesondere Gebäude und dergleichen perspektivisch dreidimensional aus dem entsprechenden Ansichtswinkel wiedergegeben werden.

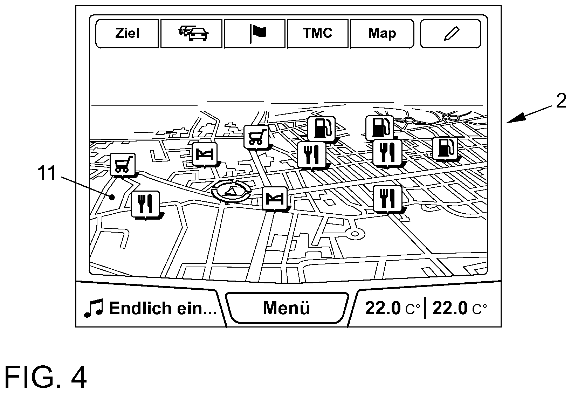

In Fig. 4 ist eine Anzeige der Anzeigefläche 2 gezeigt, welche nach der Berührung der berührungsempfindlichen Oberfläche 5 im Bereich 7 mit zwei Fingern 9 und 10 erzeugt wird. Sie zeigt die geographische Karte aus einem Ansichtswinkel von schräg oben bis zu einem Horizont.

Falls die Anzeigevorrichtung 1 so ausgebildet ist, dass sie die Informationen autostereoskopisch anzeigen kann, ist es möglich, das Objekt 11 selbst mit der darin enthaltenen geographischen Karte so zu verändern, dass beim Betrachter ein tatsächlicher dreidimensionaler Eindruck erzeugt wird, da die beiden Augen des Betrachters verschiedene Teilbilder sehen. In diesem Fall könnte die geographische Karte beispielsweise um eine obere horizontale Kante des Objekts 11 aus der Ebene der Anzeigefläche 2 herausgeschwenkt werden, so dass sich für den Betrachter der gewünschte Ansichtswinkel dreidimensional ergibt.

Bei dem mit Bezug zu den Fig. 2 bis 4 beschriebenen Ausführungsbeispiel hängt die Richtung des Schwenkwinkels, d. h. ob die geographische Karte nach hinten gekippt wird oder wieder aufgestellt wird, von den Positionen der gleichzeitigen Berührungen der Anzeigefläche 2 ab. Wird die Oberfläche 5 der Anzeigefläche 2 im Bereich 7 berührt, wird die Karte nach hinten gekippt, wird die Oberfläche 5 im Bereich 8 berührt, wird die Karte wieder aufgestellt. Allgemein ist es möglich, in einem nicht erfindungsgemäßen Beispiel die Ausrichtung der Schwenkachse aus einem Referenzpunkt und den Positionen der gleichzeitigen Berührungen der Anzeigefläche 2 zu berechnen. Beispielsweise könnte der Referenzpunkt in der Mitte der Anzeigefläche 2 positioniert sein. Vom Mittelpunkt einer Strecke zwischen den zwei Berührungspunkten der Anzeigefläche 2 kann eine Strecke zu diesem Referenzpunkt gezogen werden. Die Schwenkachse steht dann senkrecht auf dieser Verbindungsstrecke und geht z. B. durch den Referenzpunkt, wobei die Information in Richtung des Druckes geschwenkt wird, der beim Berühren der Anzeigefläche 2 ausgeübt wird. Der Nutzer kann auf diese Weise sehr intuitiv die in einem Objekt 11 dargestellte Information durch Veränderung des Ansichtswinkels schwenken, da sich der Ansichtswinkel so verändert, wie ein körperliches Objekt, welches von dem Nutzer in eine bestimmte Richtung gedrückt wird, wenn das körperliche Objekt einen ortsfesten Referenzpunkt besitzt.

### BEZUGSZEICHENLISTE

- 1: Anzeigevorrichtung
- 2: Anzeigefläche
- 3: Steuervorrichtung
- 4: Speicher
- 5: berührungsempfindliche Oberfläche
- 6: Fahrzeugbus
- 7: Bereich
- 8: Bereich
- 9: Fingerspitze
- 10: Fingerspitze
- 11: Objekt

## Patentansprüche

1. Verfahren zum Anzeigen von Informationen in einem Fahrzeug, bei dem
- zumindest ein Objekt (11) mittels einer Anzeigefläche (2) angezeigt wird, wobei in dem Objekt (11) Informationen in einem ersten virtuellen Ansichtswinkel dargestellt werden, und
- in Abhängigkeit von einem Steuersignal von einer Steuervorrichtung Graphikdaten erzeugt werden, welche die Darstellung der von dem graphischen Objekt (11) dargestellten Informationen so verändern, dass die Informationen in einem zweiten virtuellen Ansichtswinkel dargestellt werden,
- wobei bei einer berührungsempfindlichen Oberfläche (5) der Anzeigefläche (2) eine gleichzeitige Berührung bei verschiedenen Bereichen detektierbar ist,
- das Steuersignal durch einen Bedienvorgang auf der berührungsempfindlichen Oberfläche (5) ausgelöst wird, bei dem die Anzeigefläche (2) gleichzeitig bei zumindest zwei Bereichen berührt wird, und bei einem Übergang von einer Darstellung in dem ersten virtuellen Ansichtswinkel zu einer Darstellung in den zweiten virtuellen Ansichtswinkel die Graphikdaten so erzeugt werden, dass ein Schwenken der dargestellten Informationen in den zweiten virtuellen Ansichtswinkel gezeigt wird, wobei
- die graphisch dargestellten Informationen eine geographische Karte betreffen, die in dem Objekt (11) angezeigt wird, **dadurch gekennzeichnet, dass**
- die Richtung eines Schwenkwinkels, um den die geographische Karte geschwenkt wird, von den Positionen der gleichzeitigen Berührungen der Anzeigefläche abhängt, wobei bei der Anzeigefläche (2) ein oberer Bereich (7) an einem oberen Rand der Anzeigefläche (2) und ein unterer Bereich (8) an einem unteren Rand der Anzeigefläche (2) für den Bedienvorgang (7, 8) definiert sind, wobei bei einer Berührung der berührungsempfindlichen Oberfläche (5) bei den zumindest zwei Bereichen in dem oberen Bereich (7) die Darstellung der geographischen Karte um eine in einer unteren Kante des Objekts (11) liegende horizontale Achse nach hinten gekippt wird, und bei einer Berührung der berührungsempfindlichen Oberfläche (5) bei den zumindest zwei Bereichen in dem unteren Bereich (8) die nach hinten gekippte Darstellung wieder aufgestellt wird, und
- der Schwenkwinkel von der Dauer der gleichzeitigen Berührung bei verschiedenen Bereichen der Anzeigefläche (2) abhängt.

2. Verfahren nach Anspruch 1,
**dadurch gekennzeichnet,**
**dass** bei dem Bedienvorgang eine vom Nutzer ausgeübte Kraft detektiert wird und dass der Schwenkwinkel von der Größe der beim Bedienvorgang vom Nutzer ausgeübten Kraft abhängt.

3. Verfahren nach einem der vorstehenden Ansprüche,
**dadurch gekennzeichnet,**
**dass** der erste virtuelle Ansichtswinkel 0° ist, bei dem eine Aufsicht auf die geographische Karte angezeigt wird, und der zweite virtuelle Ansichtswinkel zwischen 0° und 90° liegt, so dass eine Ansicht der geographischen Karte von schräg oben angezeigt wird.

4. Verfahren nach einem der vorstehenden Ansprüche,
**dadurch gekennzeichnet,**
**dass** bei dem zweiten virtuellen Ansichtswinkel eine dreidimensionale, dem Schwenkwinkel entsprechende Ansicht der geographischen Karte angezeigt wird.

5. Verfahren nach einem der vorstehenden Ansprüche,
**dadurch gekennzeichnet,**
**dass** die in dem Objekt (11) dargestellten Informationen autostereoskopisch angezeigt werden.

6. Vorrichtung zum Anzeigen von Informationen in einem Fahrzeug, mit
- einer Anzeigefläche (2) mit einer berührungsempfindlichen Oberfläche (5) zum Anzeigen der Informationen zumindest eines Objekts (11) und
- einer Steuervorrichtung (3), mit welcher Graphikdaten erzeugbar sind, die zumindest ein auf der Anzeigefläche (2) darstellbares graphisches Objekt (11) anzeigen, in welchem Informationen in einem ersten virtuellen Ansichtswinkel und einem zweiten virtuellen Ansichtswinkel darstellbar sind,
- wobei mittels der berührungsempfindlichen Oberfläche (5) der Anzeigefläche (2) die gleichzeitige Berührung bei verschiedenen Bereichen detektierbar ist,
- von der Steuervorrichtung (3) in Abhängigkeit von der Detektion einer gleichzeitigen Berührung der berührungsempfindlichen Oberfläche (5) der Anzeigefläche (2) die Graphikdaten so veränderbar sind, dass die Darstellung den Informationen von dem ersten virtuellen Ansichtswinkel in den zweiten virtuellen Ansichtswinkel übergeht, wobei bei einem Übergang von einer Darstellung in dem ersten virtuellen Ansichtswinkel zu einer Darstellung in den zweiten virtuellen Ansichtswinkel die Graphikdaten so erzeugbar sind, dass ein Schwenken der dargestellten Informationen in den zweiten virtuellen Ansichtswinkel gezeigt wird, wobei
- die Anzeigefläche (2) im Innenraum eines Fahrzeugs angeordnet ist und
- die geographisch dargestellten Informationen eine geographische Karte betreffen, die in dem Objekt (11) angezeigt wird, **dadurch gekennzeichnet, dass**
- die Richtung eines Schwenkwinkels, um den die geographische Karte geschwenkt wird, von den Positionen der gleichzeitigen Berührungen der Anzeigefläche abhängt, wobei bei der Anzeigefläche (2) ein oberer Bereich (7) an einem oberen Rand der Anzeigefläche (2) und ein unterer Bereich (8) an einem unteren Rand der Anzeigefläche (2) für den Bedienvorgang (7, 8) definiert sind, wobei bei einer Berührung der berührungsempfindlichen Oberfläche (5) bei den zumindest zwei Bereichen in dem oberen Bereich (7) die Darstellung der geographischen Karte um eine in einer unteren Kante des Objekts (11) liegende horizontale Achse nach hinten gekippt wird, und bei einer Berührung der berührungsempfindlichen Oberfläche (5) bei den zumindest zwei Bereichen in dem unteren Bereich (8) die nach hinten gekippte Darstellung wieder aufgestellt wird, und
- der Schwenkwinkel von der Dauer der gleichzeitigen Berührung bei verschiedenen Bereichen der Anzeigefläche (2) abhängt.

7. Vorrichtung nach Anspruch 6,
**dadurch gekennzeichnet,**
**dass** mittels der Anzeigefläche (2) eine autostereoskopische Anzeige erzeugbar ist.

8. Vorrichtung nach Anspruch 6 oder 7,
**dadurch gekennzeichnet,**
**dass** die Anzeigefläche (2) drucksensitiv ist, so dass die bei der Berührung der Anzeigefläche (2) ausgeübte Kraft detektierbar ist.

## Claims

1. Method for displaying information in a vehicle, in which
- at least one object (11) is displayed by means of a display panel (2), wherein information is depicted in the object (11) at a first virtual viewing angle, and
- a control signal from a control apparatus is taken as a basis for producing graphics data that alter the depiction of the information depicted by the graphical object (11) such that the information is depicted at a second virtual viewing angle,
- wherein a touch sensitive surface (5) of the display panel (2) entails a simultaneous touch to different areas being detectable,
- the control signal is triggered by an operator control process on the touch sensitive surface (5) in which the display panel (2) is simultaneously touched in at least two areas, and a transition from a depiction at the first virtual viewing angle to a depiction at the second virtual viewing angle entails the graphics data being produced such that the depicted information is shown swivelling to the second virtual viewing angle,
wherein
- the graphically depicted information relates to a geographical map displayed in the object (11), **characterized in that**
- the direction of a swivel angle through which the geographical map is swivelled is dependent on the positions of the simultaneous touches to the display panel, wherein the display panel (2) has an upper area (7) defined at an upper edge of the display panel (2) and a lower area (8) defined at a lower edge of the display panel (2) in the operator control process (7, 8), wherein a touch to the touch sensitive surface (5) in the upper area (7) of the at least two areas entails the depiction of the geographical map being tilted to the rear about a horizontal axis situated in a lower edge of the object (11), and a touch to the touch sensitive surface (5) in the lower area (8) of the at least two areas entails the depiction tilted to the rear being restored, and
- the swivel angle is dependent on the duration of the simultaneous touch to different areas of the display panel (2).

2. Method according to Claim 1,
**characterized**
**in that** the operator control process entails a force exerted by the user being detected and in that the swivel angle is dependent on the magnitude of the force exerted by the user during the operator control process.

3. Method according to either of the preceding claims,
**characterized**
**in that** the first virtual viewing angle is 0°, at which a top view of the geographical map is displayed, and the second virtual viewing angle is between 0° and 90°, so that a view of the geographical map obliquely from above is displayed.

4. Method according to one of the preceding claims,
**characterized**
**in that** the second virtual viewing angle entails a three dimensional view of the geographical map consistent with the swivel angle being displayed.

5. Method according to one of the preceding claims,
**characterized**
**in that** the information depicted in the object (11) is displayed autostereoscopically.

6. Apparatus for displaying information in a vehicle, having
- a display panel (2) having a touch sensitive surface (5) for displaying information of at least one object (11), and
- a control apparatus (3) by means of which graphics data are producible that display at least one graphical object (11) depictable on the display panel (2), in which graphical object information is depictable at a first virtual viewing angle and a second virtual viewing angle,
- wherein the touch sensitive surface (5) of the display panel (2) renders the simultaneous touch to different areas detectable,
- the graphics data are alterable by the control operator (3) on the basis of the detection of a simultaneous touch to the touch sensitive surface (5) of the display panel (2) such that the depiction as the information transitions from the first virtual viewing angle to the second virtual viewing angle, wherein a transition from a depiction at the first virtual viewing angle to a depiction at the second virtual viewing angle entails the graphics data being producible such that the depicted information is shown swivelling to the second virtual viewing angle,
wherein
- the display panel (2) is arranged in the interior of a vehicle, and
- the geographically depicted information relates to a geographical map displayed in the object (11), **characterized in that**
- - the direction of a swivel angle through which the geographical map is swivelled is dependent on the positions of the simultaneous touches to the display panel, wherein the display panel (2) has an upper area (7) defined at an upper edge of the display panel (2) and a lower area (8) defined at a lower edge of the display panel (2) in the operator control process (7, 8), wherein a touch to the touch sensitive surface (5) in the upper area (7) of the at least two areas entails the depiction of the geographical map being tilted to the rear about a horizontal axis situated in a lower edge of the object (11), and a touch to the sensitive surface (5) in the lower area (8) of the at least two areas entails the depiction tilted to the rear being restored, and
- the swivel angle is dependent on the duration of the simultaneous touch to different areas of the display panel (2).

7. Apparatus according to Claim 6,
**characterized**
**in that** the display panel (2) renders an autostereoscopic display producible.

8. Apparatus according to Claim 6 or 7,
**characterized**
**in that** the display panel (2) is pressure sensitive, so that the force exerted when the display panel (2) is touched is detectable.

## Revendications

1. Procédé d'affichage d'informations dans un véhicule, dans lequel
- au moins un objet (11) est affiché au moyen d'une surface d'affichage (2), dans lequel des informations sont représentées selon un premier angle de vue virtuel dans l'objet (11), et
- des données graphiques sont générées en fonction d'un signal de commande d'un dispositif de commande, lesquelles données graphiques modifient la représentation des informations représentées par l'objet graphique (11) de manière à ce que les informations soient représentées selon un deuxième angle de vue virtuel,
- dans lequel le fait que différentes zones d'une surface tactile (5) de la surface d'affichage (2) soient touchées peut être détecté,
- le signal de commande est déclenché par une opération effectuée sur la surface tactile (5), lors de laquelle la surface d'affichage (2) est touchée simultanément dans au moins deux zones, et lors du passage d'une représentation selon le premier angle de vue virtuel à une représentation selon le deuxième angle de vue virtuel, les données graphiques sont générées de manière à faire apparaître un pivotement des informations représentées selon le deuxième angle de vue virtuel,
dans lequel
- les informations représentées graphiquement se rapportent à une carte géographique affichée dans l'objet (11), **caractérisé en ce que**
- la direction d'un angle de pivotement autour duquel la carte géographique est amenée à pivoter dépend des positions auxquelles la surface d'affichage est touchée simultanément, dans lequel, pour la surface d'affichage (2), une zone supérieure (7) au niveau d'un bord supérieur de la surface d'affichage (2) et une zone inférieure (8) au niveau d'un bord inférieur de la surface d'affichage (2) sont définies pour l'opération (7, 8) effectuée, dans lequel, lorsque la surface tactile (5) est touchée dans lesdites au moins deux zones de la zone supérieure (7), la représentation de la carte géographique est inclinée vers l'arrière autour d'un axe horizontal situé sur un bord inférieur de l'objet (11), et lorsque la surface tactile (5) est touchée dans lesdites au moins deux zones de la zone inférieure (8), la représentation inclinée vers l'arrière est repositionnée, et
- l'angle de pivotement dépend de la durée pendant laquelle des zones différentes de la surface d'affichage (2) sont simultanément touchées.

2. Procédé selon la revendication 1,
**caractérisé en ce qu'**une force exercée par l'utilisateur est détectée lors de l'opération effectuée et **en ce que** l'angle de pivotement dépend de l'intensité de la force exercée par l'utilisateur lors de l'opération effectuée.

3. Procédé selon l'une des revendications précédentes,
**caractérisé en ce que** le premier angle de vue virtuel est de 0°, une vue de la carte géographique étant affichée pour cet angle, et **en ce que** le deuxième angle de vue virtuel est compris entre 0° et 90°, de sorte qu'une vue de la carte géographique est affichée de manière oblique de dessus.

4. Procédé selon l'une des revendications précédentes,
**caractérisé en ce qu'**une vue tridimensionnelle de la carte géographique correspondant à l'angle de pivotement est affichée selon le deuxième angle de vue virtuel.

5. Procédé selon l'une des revendications précédentes,
**caractérisé en ce que** les informations représentées dans l'objet (11) sont affichées de manière autostéréoscopique.

6. Dispositif d'affichage d'informations dans un véhicule, comprenant
- une surface d'affichage (2) ayant une surface tactile (5) permettant d'afficher les informations d'au moins un objet (11) et
- un dispositif de commande (3) permettant de générer des données graphiques qui affichent au moins un objet graphique (11) pouvant être représenté sur la surface d'affichage (2) et dans lequel les informations peuvent être représentées selon un premier angle de vue virtuel et selon un deuxième angle de vue virtuel,
- dans lequel le fait que différentes zones soient touchées simultanément peut être détecté au moyen de la surface tactile (5) de la surface d'affichage (2),
- les données graphiques peuvent être modifiées par le dispositif de commande (3) en fonction de la détection du fait que la surface tactile (5) de la surface d'affichage (2) est touchée simultanément de manière à ce que la représentation des informations passe du premier angle de vue virtuel au deuxième angle de vue virtuel, dans lequel, lors du passage d'une représentation selon le premier angle de vue virtuel à une représentation selon le deuxième angle de vue virtuel, les données graphiques peuvent être générées de manière à faire apparaître un pivotement des informations représentées selon le deuxième angle de vue virtuel,
dans lequel
- la surface d'affichage (2) est disposée dans l'habitacle d'un véhicule et les informations représentées géographiquement se rapportent à une carte géographique affichée dans l'objet (11), **caractérisé en ce que**
- la direction d'un angle de pivotement autour duquel la carte géographique est amenée à pivoter dépend de la position auxquelles la surface d'affichage est touchée simultanément, dans lequel, pour la surface d'affichage (2), une zone supérieure (7) au niveau d'un bord supérieur de la surface d'affichage (2) et une zone inférieure (8) au niveau d'un bord inférieur de la surface d'affichage (2) sont définies pour l'opération (7, 8) effectuée, dans lequel, lorsque la surface tactile (5) est touchée dans lesdites au moins deux zones de la zone supérieure (7), la représentation de la carte géographique est inclinée vers l'arrière autour d'un axe horizontal situé sur un bord inférieur de l'objet (11), et lorsque la surface tactile (5) est touchée dans lesdites au moins deux zones de la zone inférieure (8), la représentation inclinée vers l'arrière est repositionnée, et
- l'angle de pivotement dépend de la durée pendant laquelle des zones différentes de la surface d'affichage (2) sont simultanément touchées.

7. Dispositif selon la revendication 6, **caractérisé en ce qu'**un affichage autostéréoscopique peut être généré au moyen de la surface d'affichage (2) .

8. Dispositif selon la revendication 6 ou 7, **caractérisé en ce que** la surface d'affichage (2) est sensible à la pression, de sorte que la force exercée lorsque la surface d'affichage (2) est touchée peut être détectée.
